# EUROPÄISCHE PATENTSCHRIFT

(11) **EP 2 930 379 B1**
(45) Veröffentlichungstag und Bekanntmachung des Hinweises auf die Patenterteilung: **26.10.2016**
(21) Anmeldenummer: 15000953.8
(22) Anmeldetag: 01.04.2015
(51) Int. Cl.: F16B 43/00, F16B 13/06, F16B 13/04, F16B 13/00

(54) **DICHTUNGSANORDNUNG FÜR EINEN ANKER UND VERFAHREN ZU IHRER HERSTELLUNG**
SEALING ASSEMBLY FOR AN ANCHOR AND METHOD FOR THEIR PREPARATION
SYSTÈME D'ÉTANCHÉITÉ POUR UNE CHEVILLE D'ANCRAGE ET SON PROCÉDÉ DE FABRICATION

(30) Priorität: 11.04.2014 DE 102014105199; 13.03.2015 DE 102015003220
(43) Veröffentlichungstag der Anmeldung: 14.10.2015
(73) Patentinhaber: fischerwerke GmbH & Co. KG, 72178 Waldachtal (DE)
(72) Erfinder: Mayer, Klaus, 72469 Meßstetten (DE); Hacker, Oliver, 72160 Horb (DE); Bezecný, Lubor, 72250 Freudenstadt (DE)

(56) Entgegenhaltungen:
- EP-A1- 0 486 869
- WO-A1-2010/101693
- FR-A1- 2 321 064
- JP-A- H08 218 501
- JP-A- 2006 219 908
- US-A- 4 867 461
- US-A1- 2010 202 856

## Beschreibung

Die Erfindung betrifft eine Dichtungsanordnung mit einem in einem Ankerloch in einem Ankergrund verankerten Anker mit den Merkmalen des Oberbegriffs des Anspruchs 1. Des Weiteren betrifft die Erfindung ein Verfahren zur Herstellung der Dichtungsanordnung mit den Merkmalen des Oberbegriffs des Anspruchs 8. Unter einem Anker wird ein insbesondere stangenförmiges Befestigungselement verstanden, das beispielsweise durch Aufspreizen oder chemisch mit einer aushärtenden Masse wie beispielsweise einem Kunstharzmörtel in einem Ankerloch in einem Ankergrund befestigt, d.h. verankert ist.

Die Erfindung wird anhand eines betonierten Beckens erläutert, das eine wasser- oder allgemein flüssigkeitsdichte Beschichtung aufweist. Die Beschichtung kann ein wasserdichter Anstrich, eine Kunstharzschicht, Bitumen, Kunststofffolie oder eine Innenwanne aus Edelstahl sein. Die Aufzählung ist beispielhaft und nicht abschließend und die Erfindung ist nicht auf die Verwendung beschränkt, anhand derer sie beispielhaft erläutert wird. Zum Befestigen eines hier als Bauteil bezeichneten Gegenstands im Becken muss ein Ankerloch durch die flüssigkeitsdichte Beschichtung in den das Becken bildenden Beton, der hier als Ankergrund bezeichnet wird, gebohrt oder in sonstiger Weise eingebracht werden. In das Ankerloch wird ein Anker eingebracht und verankert, der aus dem Ankergrund vorsteht, so dass das Bauteil an ihm befestigt werden kann. Das Bauteil kann beispielsweise eine Leiter, ein Fußtritt, ein technisches Ausrüstungsteil, ein Aggregat usw. sein. Notwendig ist eine zuverlässige Abdichtung des Lochs in der flüssigkeitsdichten Beschichtung.

Aus der japanischen Patentanmeldung 2006-219 908 ist eine Dichtungsanordnung mit einem in einem Ankerloch in einem Ankergrund verankerten Anker bekannt. Der Anker weist eine hülsenförmige Dichtung auf, die auf einen Ankerschaft aufgesetzt ist und die ein Stück weit in das Ankerloch ragt und ein Stück weit aus dem Ankergrund vorsteht, wenn der Anker in das Ankerloch eingebracht ist. Durch Aufschrauben und Festziehen einer Mutter auf den ein Gewinde aufweisenden Ankerschaft wird die hülsenförmige Dichtung gestaucht, wodurch sie radial nach innen und nach außen aufgeweitet wird, so dass sie nach außen gegen eine Lochwand des Ankerlochs und nach innen gegen das Gewinde des Ankerschafts beaufschlagt wird. Beim Stauchen stützt sich die Dichtung axial an einer auf dem Ankerschaft angeordneten Hülse des Ankers oder an einer Ringstufe des Ankerlochs ab.

Ebenfalls zur Abdichtung in einem Ankerloch schlägt die internationale Patentanmeldung WO 2009/089 876 A1 vor, eine Hülse eines Ankers mit einer äußeren und einer inneren Ringnut auszubilden, die durch Durchstichkanäle verbunden sind. Eine weitere Ringnut an einer Unterseite eines Flanschs der Hülse ist durch achsparallele Nuten mit der anderen äußeren Ringnut verbunden. In die Ringnuten und Nuten wird eine Dichtmasse eingebracht, die durch die Durchstichkanäle auch nach innen in die innere Ringnut strömt und die nach einem Abbinden eine Dichtung bzw. drei Dichtringe in den Ringnuten der Hülse des Ankers bildet.

Aufgabe der Erfindung ist, eine Dichtungsanordnung und ein Verfahren zu ihrer Herstellung vorzuschlagen, die an der Durchtrittsstelle eines Ankers durch eine flüssigkeitsdichte Beschichtung eines Ankergrunds abdichtet.

Diese Aufgabe wird erfindungsgemäß durch die Merkmale der Ansprüche 1 und 8 gelöst. Die erfindungsgemäße Dichtungsanordnung weist einen Anker auf, der in einem Ankerloch in einem Ankergrund verankert ist. Ein Ankerschaft des Ankers steht aus dem Ankergrund vor und durchgreift eine Durchgangsöffnung in einem Bauteil, das mit dem Anker am Ankergrund befestigt ist. Zur Abdichtung weist die Dichtungsanordnung erfindungsgemäß eine ankergrundseitige Dichtung und eine, insbesondere gegenüber der ankergrundseitigen Dichtung gesonderte, äußere Dichtung auf. Die Bezeichnung als "ankergrundseitig" und als "äußere" gibt den Ort der Anordnung der Dichtungen an und dient einer eindeutigen Bezeichnung und Unterscheidung der Dichtungen und soll nicht einschränkend verstanden werden. Die ankergrundseitige Dichtung weist eine erste Lochscheibe und einen mit der ersten Lochscheibe einstückigen, rohrförmigen ersten Kragen auf. Die erste Lochscheibe ist zwischen dem Bauteil und dem Ankergrund oder der flüssigkeitsdichten Beschichtung des Ankergrunds um den Ankerschaft herum angeordnet und dichtet zwischen dem Bauteil und dem Ankergrund oder der flüssigkeitsdichten Beschichtung des Ankergrunds ab. Der rohrförmige erste Kragen umschließt den Ankerschaft und ragt in die Durchgangsöffnung im Bauteil. Der erste Kragen der ankergrundseitigen Dichtung dient insbesondere einer Befestigung der Dichtung am Bauteil, bevor das Bauteil auf den aus dem Ankergrund vorstehenden Ankerschaft aufgesetzt ist. Der erste Kragen der ankergrundseitigen Dichtung wird in die Durchgangsöffnung des Bauteils gesteckt und hält dort insbesondere klemmend, bevor das Bauteil auf den Ankerschaft aufgesetzt wird.

Die äußere Dichtung weist ebenfalls eine Lochscheibe - im Folgenden "zweite Lochscheibe" - und einen mit ihr einstückigen, rohrförmigen Kragen - im Folgenden "zweiter Kragen" - auf. Die zweite Lochscheibe liegt abdichtend an einer dem Ankergrund abgewandten Außenseite des Bauteils an. Der zweite Kragen umschließt den Ankerschaft abdichtend. Es dichtet also die zweite Lochscheibe an der Außenseite des Bauteils und der zweite Kragen am Ankerschaft ab, somit dichtet die äußere Dichtung zwischen dem Bauteil und dem Ankerschaft ab. Zusammen mit der ankergrundseitigen Dichtung, die zwischen dem Bauteil und dem Ankergrund bzw. der flüssigkeitsdichten Beschichtung des Ankergrunds abdichtet, wird eine Abdichtung des Ankerlochs in der flüssigkeitsdichten Beschichtung des Ankergrunds erreicht. Selbstverständlich ist auch eine Abdichtung eines Ankerlochs in einem Ankergrund möglich, der keine flüssigkeitsdichte Beschichtung aufweist.

Die erste Lochscheibe der ankergrundseitigen Dichtung weist vorzugsweise einen großen Außendurchmesser auf, ihr Außendurchmesser ist bei Ausführungsformen der Erfindung mindestens drei Mal so groß wie ein Durchmesser des Ankerschafts bzw. wie ein Durchmesser eines Lochs der Lochscheibe, eine Ausgestaltung sieht einen ungefähr vier Mal so großen Außendurchmesser der ersten Lochscheibe wie des Außendurchmessers des Ankerschafts bzw. des Lochs der ersten Lochscheibe vor. Diese Ausgestaltung der Erfindung bewirkt eine Abdichtung zwischen dem Bauteil und dem Ankergrund auch an einem Ausbruchkrater an einer Mündung des Ankerlochs, d.h. einer Aufweitung des Ankerlochs an der Oberfläche des Ankergrunds.

Eine Ausgestaltung der Erfindung sieht vor, dass der erste Kragen der ankergrundseitigen Dichtung mindestens eine Erhebung auf seiner Außenseite aufweist. Die Erhebung/en können Warzen, Sicken, Rippen, Wulste und dgl. sein. Die mindestens eine Erhebung bewirkt oder verbessert einen Halt des rohrförmigen ersten Kragens in der Durchgangsöffnung des Bauteils und damit der ankergrundseitigen Dichtung am Bauteil, bis dieses auf den Ankerschaft aufgesetzt ist. Außerdem vergrößert die mindestens eine Erhebung eine Durchmessertoleranz eines Außendurchmessers des ersten Kragens und eines Innendurchmessers der Durchgangsöffnung im Bauteil. Ist die mindestens eine Erhebung umlaufend, beispielsweise als Wulst oder Lippe, ausgeführt, bewirkt bzw. verbessert sie eine Abdichtung des ersten Kragens der ankergrundseitigen Dichtung in der Durchgangsöffnung des Bauteils.

Der zweite Kragen der äußeren Dichtung weist bei einer Ausgestaltung der Erfindung ein Untermaß in Bezug auf den Ankerschaft oder ein Gewinde des Ankerschafts auf. Dadurch wird die Abdichtung des Kragens oder äußeren Dichtung am Ankerschaft erreicht. Mit "Untermaß" ist gemeint, dass ein Presssitz des zweiten Kragens auf dem Anker besteht, also vor dem Fügen der Innendurchmesser des zweiten Kragens geringer als der Außendurchmesser des Ankers an der korrespondierenden Stelle ist.

Auf der Seite der Lochscheibe weitet sich ein zweites Durchgangsloch der äußeren Dichtung, das vom Ankerschaft durchgriffen wird, auf ein Übermaß in Bezug auf den Ankerschaft bzw. ein Gewinde des Ankerschafts auf, wodurch die äußere Dichtung einfach und ohne zu verkanten auf den Ankerschaft und insbesondere auf ein Gewinde des Ankerschafts, sofern ein solches vorhanden ist, aufgesetzt werden kann.

Eine bevorzugte Ausgestaltung der Erfindung sieht vor, dass der zweite Kragen auf einer der zweiten Lochscheibe abgewandten Seite eine axial abstehende, insbesondere in Umfangsrichtung umlaufende Dichtlippe aufweist. Eine Mutter, die zum Befestigen des Bauteils auf ein Gewinde des Ankerschafts geschraubt und festgezogen wird, staucht die axial abstehende Dichtlippe, die dadurch nach innen in dichtende Anlage an den Ankerschaft beaufschlagt wird. Weder notwendig noch ausgeschlossen ist, dass die Dichtlippe beim Stauchen nicht nur nach innen, sondern zusätzlich auch nach außen beaufschlagt wird. Eine Formgebung eines Ringquerschnitts der Dichtlippe kann die Beaufschlagung nach innen beim Stauchen der Dichtlippe begünstigen. Auch kann die axial vom zweiten Kragen abstehende Dichtlippe zusätzlich den zweiten Kragen stauchen und nach innen in dichtende Anlage an den Ankerschaft beaufschlagen. Die Dichtlippe bewirkt oder verbessert die Abdichtung zwischen dem zweiten Kragen und dem Ankerschaft.

Eine Ausgestaltung der Erfindung sieht vor, dass die äußere Dichtung eine lochscheibenförmige Tragscheibe aufweist, die auf der zweiten Lochscheibe der äußeren Dichtung angeordnet ist und den zweiten Kragen umschließt. Die axial vom zweiten Kragen der äußeren Dichtung abstehende Dichtlippe steht aus der Tragscheibe vor, so dass sie beim Festziehen der Mutter auf dem Gewinde des Ankerschafts gestaucht und wie beabsichtigt in dichtende Anlage nach innen an den Ankerschaft beaufschlagt wird. Den zweiten Kragen, der axial nicht höher sein muss, als die Tragscheibe dick ist, stützt die Tragscheibe und begrenzt oder vermeidet seine Stauchung. Außerdem bewirkt die Tragscheibe eine voll- oder zumindest großflächige Anpressung der Lochscheibe der äußeren Dichtung an die Außenseite des Bauteils, um die Abdichtung dort sicherzustellen.

Zur Herstellung der erfindungsgemäßen Dichtungsanordnung sieht das Verfahren gemäß Anspruch 8 vor, dass zur Befestigung der ankergrundseitigen Dichtung am Bauteil der erste Kragen in die Durchgangsöffnung im Bauteil gesteckt wird, bevor das Bauteil auf den Ankerschaft aufgesetzt oder, beispielsweise im Fall einer Durchsteckmontage, der Anker durch die Durchgangsöffnung im Bauteil gesteckt wird. Der Ankerschaft wird in die Durchgangsöffnung im Bauteil verbracht, indem das Bauteil auf den Ankerschaft aufgesetzt oder der Anker durch die Durchgangsöffnung im Bauteil gesteckt wird. Außerdem wird der Anker in das Ankerloch eingebracht, wobei zuerst der Anker in das Ankerloch im Ankergrund eingebracht und anschließend das Bauteil mit der Durchgangsöffnung auf den aus dem Ankergrund vorstehenden Ankerschaft aufgesetzt werden, oder der Anker in die Durchgangsöffnung im Bauteil gesteckt und mit dem Bauteil in das Ankerloch eingebracht oder bei einer Durchsteckmontage das Bauteil an den Ankergrund angesetzt und der Anker durch die Durchgangsöffnung im Bauteil in das Ankerloch im Ankergrund eingebracht werden kann. Die äußere Dichtung wird auf dem Ankerschaft angeordnet und das Bauteil beispielsweise mit einer Mutter, die auf ein Gewinde des Ankerschafts geschraubt und festgezogen wird, gegen den Ankergrund gespannt. Dabei wird die äußere Dichtung auf die Außenseite des Bauteils gedrückt und die ankergrundseitige Dichtung zwischen dem Bauteil und dem Ankergrund eingespannt, so dass beide Dichtungen wie vorgesehen dichten. Außerdem wird die vom zweiten Kragen axial abstehende Dichtlippe, sofern vorhanden, gestaucht und in dichtende Anlage an den Ankerschaft beaufschlagt.

Die Erfindung wird nachfolgend anhand eines in der Zeichnung dargestellten Ausführungsbeispiels näher erläutert. Es zeigen:
- Figur 1: einen Achsschnitt einer erfindungsgemäßen Dichtungsanordnung;
- Figuren 2-3: Halbschnitte von Dichtungen der Dichtungsanordnung aus Figur 1; und
- Figur 4: eine Detailvergrößerung gemäß Quadrat IV in Figur 3.

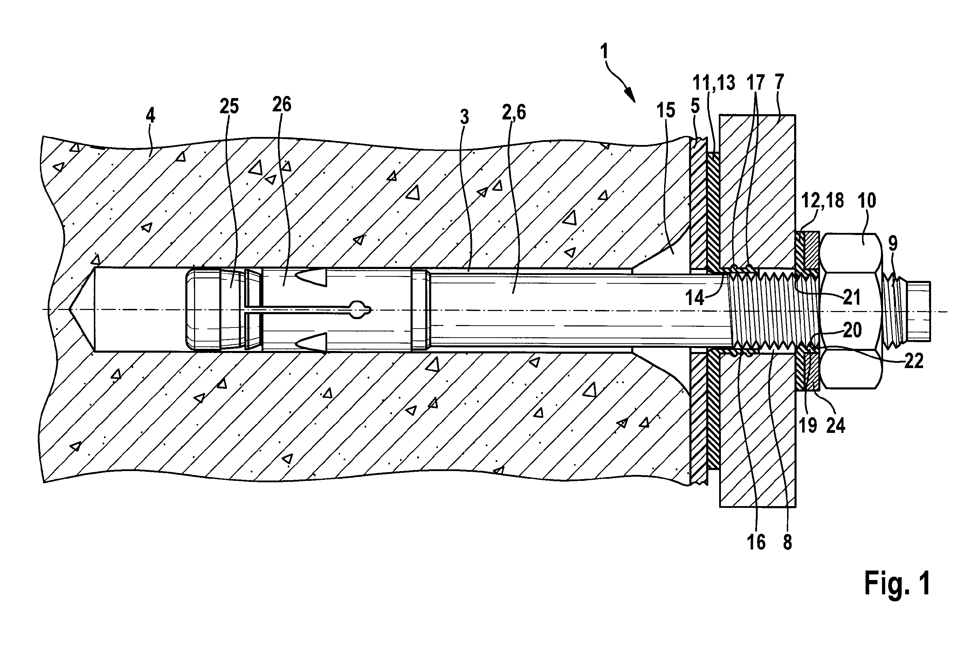

Die in Figur 1 gezeigte erfindungsgemäße Dichtungsanordnung 1 weist einen Anker 2 auf, der in einem Ankerloch 3 in einem Ankergrund 4, beispielsweise aus Beton, verankert ist. Der Ankergrund 4 weist eine flüssigkeitsdichte Beschichtung 5, beispielsweise einen flüssigkeitsdichten Anstrich, eine Kunstharzschicht, Bitumen, oder eine Kunststofffolie auf, die am Ankerloch 3 ebenfalls ein Loch aufweist. Ein Ankerschaft 6 des Ankers 2 steht aus dem Ankergrund 4 vor. Auf dem Ankerschaft 6 ist ein Bauteil 7 angeordnet, das eine Durchgangsöffnung 8 aufweist, durch die der Ankerschaft 6 durchgeht. An seinem aus dem Ankergrund 4 vorstehenden Ende weist der Ankerschaft 6 ein Gewinde 9 auf, auf das eine Mutter 10 geschraubt und festgezogen ist, die das Bauteil 7 gegen den Ankergrund 4 spannt, so dass das Bauteil 7 am Ankergrund 4 befestigt ist.

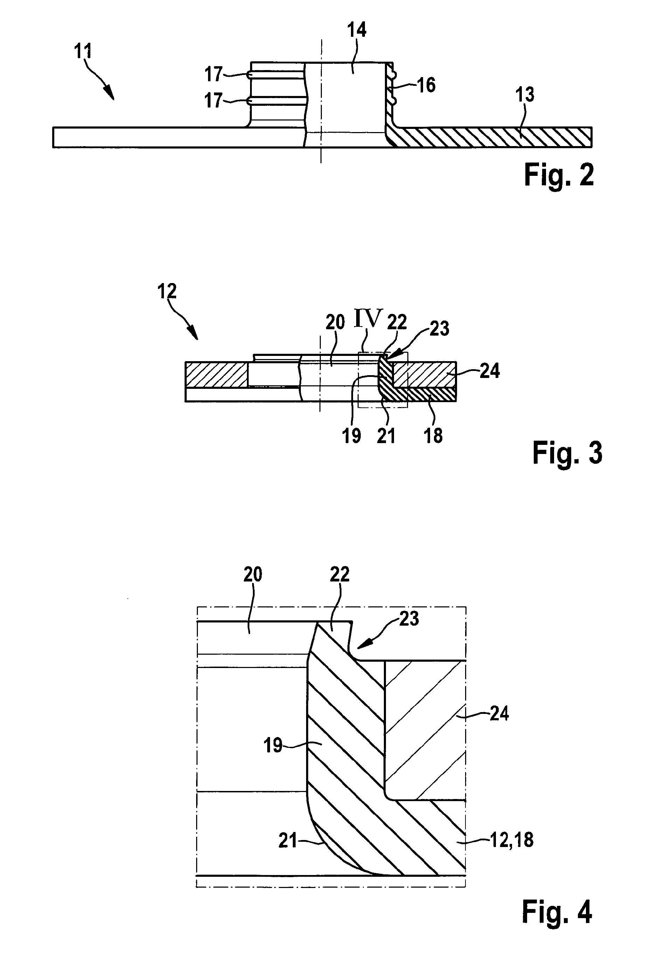

Zwischen dem Bauteil 7 und der flüssigkeitsdichten Beschichtung 5 des Ankergrunds 4 ist eine ankergrundseitige Dichtung 11, die größer als Einzelteil in Figur 2 gezeigt ist, angeordnet. Eine äußere Dichtung 12, die größer als Einzelteil in Figur 3 gezeigt ist, angeordnet. Die Dichtungen 11, 12 bestehen aus Elastomeren und sind gesondert, also nicht einstückig. Die ankergrundseitige Dichtung 11 weist eine erste Lochscheibe 13 mit großem Außendurchmesser auf. Der Außendurchmesser der ersten Lochscheibe 13 ist ungefähr vier Mal so groß wie ein Außendurchmesser des Ankerschafts 2 bzw. ein Innendurchmesser eines ersten Durchgangslochs 14 der Dichtung 11 und Mittellochs der ersten Lochscheibe 13. Dadurch überdeckt die erste Lochscheibe 13 der ankergrundseitigen Dichtung 11 einen etwaigen Ausbruchkrater 15 an einer Mündung des Ankerlochs 3, um eine Anlage der ersten Lochscheibe 13 am Ankergrund 4 bzw. der flüssigkeitsdichten Beschichtung 5 sicherzustellen. Die ankergrundseitige Dichtung 11 weist einen rohrförmigen ersten Kragen 16 auf, der einstückig mit der ersten Lochscheibe 13 ist. Der erste Kragen 16 umschließt den Ankerschaft 6 und ragt in die Durchgangsöffnung 8 im Bauteil 7. Der erste Kragen 16 dient zur Befestigung der ankergrundseitigen Dichtung 11 am Bauteil 7, solange das Bauteil 7 noch nicht auf den Ankerschaft 6 aufgesetzt ist. Der rohrförmige erste Kragen 16 der ankergrundseitigen Dichtung 11 weist außen zwei umlaufende Wulste 17 auf, die einen Halt des ersten Kragens 16 in der Durchgangsöffnung 8 des Bauteils 7 verbessern und Durchmessertoleranzen des ersten Kragens 16 und der Durchgangsöffnung 8 ausgleichen. Anstelle der Wulste 17 kann der erste Kragen 16 auch andere Erhebungen, beispielsweise Noppen, aufweisen (nicht dargestellt). Das Bauteil 7, das von der festgezogenen Mutter 10 gegen die flüssigkeitsdichte Beschichtung 5 des Ankergrunds 4 gespannt ist, spannt die erste Lochscheibe 13 der ankergrundseitigen Dichtung 11 zwischen dem Bauteil 7 und der flüssigkeitsdichten Beschichtung 5 ein und bewirkt eine Abdichtung zwischen dem Bauteil 7 und der flüssigkeitsdichten Beschichtung 5.

Die äußere Dichtung 12 weist eine zweite Lochscheibe 18 und einen mit der zweiten Lochscheibe 18 einstückigen, rohrförmigen zweiten Kragen 19 auf. Der zweite Kragen 19 weist vor dem Fügen auf den Anker 2 ein Untermaß in Bezug auf das Gewinde 9 des Ankerschafts 6 auf, um einen Presssitz und eine Abdichtung am Ankerschaft 6 bzw. dem Gewinde 9 des Ankerschafts 6 zu erzielen. An einer lochscheibenseitigen Mündung eines zweiten Durchgangslochs 20 der äußeren Dichtung 12, mit der die Dichtung 12 auf den Ankerschaft 6 aufgesetzt ist, weist das zweite Durchgangsloch 20 eine Aufweitung 21 auf, mit der sich das Durchgangsloch 20 auf der Seite der Lochscheibe 18 auf ein Übermaß in Bezug auf den Ankerschaft 6 bzw. sein Gewinde 9 aufweitet. Die Aufweitung 21 kann, wie gezeigt, gerundet oder beispielsweise als Fase ausgeführt sein (nicht dargestellt). Die Aufweitung 21 erleichtert ein Aufsetzen der äußeren Dichtung 12 auf den Ankerschaft 6 und vermeidet ein Verkanten am Gewinde 9.

Auf der der zweiten Lochscheibe 18 abgewandten Seite weist der zweite Kragen 19 der äußeren Dichtung 12 eine axial abstehende Dichtlippe 22 auf. Wie in Figur 4 zu sehen, ist die Dichtlippe 22 innen bündig mit dem zweiten Kragen 19 und außen unter Bildung einer Ringstufe 23 nach innen versetzt. Die Dichtlippe 22 steht etwas schräg nach außen. Eine Formgebung der Dichtlippe 22 ist so gewählt, dass sie radial nach innen, d.h. in dichtende Anlage an das Gewinde 9 des Ankerschafts 6 beaufschlagt wird, wenn die Dichtlippe 22 axial gestaucht wird. Bei axialer Stauchung kann die Dichtlippe 22 auch den zweiten Kragen 19 an seinem dichtlippen-seitigen Ende radial nach innen beaufschlagen, um die Abdichtung am Gewinde 9 des Ankerschafts 6 zu bewirken. Die gezeichnete Form ist nicht zwingend für die Dichtlippe 22, ihre Formgebung bestimmt sich nach dem Zweck, durch axiale Stauchung radial nach innen gegen das Gewinde 9 des Ankerschafts 6 und in dessen Gewindegänge beaufschlagt zu werden, um eine Abdichtung zwischen der äußeren Dichtung 12 und dem Gewinde 9 zu erzielen.

Die äußere Dichtung 12 weist eine weitere Lochscheibe beispielsweise aus Metall als Tragscheibe 24 auf, die auf der zweiten Lochscheibe 18 der Dichtung 12 aufliegt und den zweiten Kragen 19 umschließt. Die Tragscheibe 24 kann beispielsweise klemmend auf dem zweiten Kragen 19 halten, an die äußere Dichtung 12 anvulkanisiert, oder lose aufgesetzt sein. Die Tragscheibe 24 ist so dick wie der zweite Kragen 19 axial hoch ist, die Dichtlippe 22 steht axial über die Tragscheibe 24 vor.

Zur Befestigung des Bauteils 7 am Ankergrund 4 wird das Ankerloch 3 durch die flüssigkeitsdichte Beschichtung 5 in den Ankergrund 4 gebohrt. Anschließend wird der Anker 2 in das Ankerloch 3 eingebracht, so dass der Ankerschaft 6 aus dem Ankergrund 4 vorsteht. Der erste Kragen 16 der ankergrundseitigen Dichtung 11 wird in die Durchgangsöffnung 8 des Bauteils 7 gesteckt, so dass die ankergrundseitige Dichtung 11 am Bauteil 7 befestigt ist. Danach wird das Bauteil 7 mit seiner Durchgangsöffnung 8 auf den aus dem Ankergrund 4 vorstehenden Ankerschaft 6 aufgesetzt, so dass die ankergrundseitige und am Bauteil 7 befestigte Dichtung 11 zwischen dem Bauteil 7 und der flüssigkeitsdichten Beschichtung 5 des Ankergrunds 4 auf dem Ankerschaft 6 angeordnet ist. Wie in Figur 1 zu sehen, ist ein Außendurchmesser der ersten Lochscheibe 13 der ankergrundseitigen Dichtung 11 so groß, dass die erste Lochscheibe 13 den Ausbruchkrater 15 des Ankerlochs 3 überdeckt und außerhalb des Ausbruchkraters 15 an der flüssigkeitsdichten Beschichtung 5 anliegt. Nach dem Aufsetzen des Bauteils 7 wird die äußere Dichtung 12 auf den Ankerschaft 6 aufgesetzt und die Mutter 10 auf das Gewinde 9 des Ankerschafts 6 geschraubt und festgezogen. Die Mutter 10 spannt über die Tragscheibe 24 die zweite Lochscheibe 18 der äußeren Dichtung 12 gegen eine dem Ankergrund 4 abgewandte Außenseite des Bauteils 7, so dass die äußere Dichtung 12 am Bauteil 7 abdichtet. Die axial vom zweiten Kragen 19 der äußeren Dichtung 12 und über die Tragscheibe 24 in Richtung der Mutter 10 abstehende Dichtlippe 22 wird von der festgezogenen Mutter 10 axial gestaucht und dadurch radial nach innen beaufschlagt, so dass sie an das Gewinde 9 des Ankerschafts 6 und in Gewindegänge des Gewindes 9 beaufschlagt wird und dort abdichtet. Dadurch wird eine Abdichtung zwischen dem Ankerschaft 6 bzw. dem Gewinde 9 des Ankerschafts 6 und der äußeren Dichtung 12 erzielt. Über die Tragscheibe 24 und die zweite Lochscheibe 18 der äußeren Dichtung 12 spannt die festgezogene Mutter 10 das Bauteil 7 gegen den Ankergrund 4, so dass das Bauteil 7 am Ankergrund 4 befestigt ist und die erste Lochscheibe 13 der ankergrundseitigen Dichtung 11 zwischen dem Bauteil 7 und der flüssigkeitsdichten Beschichtung 5 des Ankergrunds 4 eingespannt ist. Dadurch dichtet die ankergrundseitige Dichtung 11 zwischen dem Bauteil 7 und der flüssigkeitsdichten Beschichtung 5 des Ankergrunds 4 ab. Mit den beiden Dichtungen 11, 12 ist die flüssigkeitsdichte Beschichtung 5 des Ankergrunds 4 an einer Durchtrittsstelle des Ankers 2 abgedichtet.

Durch das Festziehen der Mutter 10 wird der Anker 2 gespannt, ein Spreizkonus 25, der an einem dem Gewinde 9 fernen Ende des Ankerschafts 6 angeordnet ist, wird in eine Spreizhülse 26 des Ankers 2 eingezogen und spreizt sie auf, so dass der Anker 2 im Ankerloch 3 im Ankergrund 4 verankert ist. Die Erfindung ist nicht auf Spreizanker beschränkt, sie ist in gleicher Weise an bzw. mit Ankerstangen verwirklichbar, die beispielsweise mit einem Mörtel im Ankerloch 3 verankert sind (sog. chemische Verankerung; nicht dargestellt). Andere Verankerungen sind ebenfalls möglich.

### Bezugszeichenliste

### Dichtungsanordnung für einen Anker und Verfahren zu ihrer Herstellung

- 1: Dichtungsanordnung
- 2: Anker
- 3: Ankerloch
- 4: Ankergrund
- 5: flüssigkeitsdichte Beschichtung
- 6: Ankerschaft
- 7: Bauteil
- 8: Durchgangsöffnung
- 9: Gewinde
- 10: Mutter
- 11: ankergrundseitige Dichtung
- 12: äußere Dichtung
- 13: erste Lochscheibe
- 14: erstes Durchgangsloch
- 15: Ausbruchkrater
- 16: erster Kragen
- 17: Wulst
- 18: zweite Lochscheibe
- 19: zweiter Kragen
- 20: zweites Durchgangsloch
- 21: Aufweitung
- 22: Dichtlippe
- 23: Ringstufe
- 24: Tragscheibe
- 25: Spreizkonus
- 26: Spreizhülse

## Patentansprüche

1. Dichtungsanordnung mit einem in einem Ankerloch (3) in einem Ankergrund (4) eines Bauerks verankerten Anker (2), der einen Ankerschaft (6) aufweist, der aus dem Ankergrund (4) vorsteht und eine Durchgangsöffnung (8) in einem Bauteil (7) durchgreift, wobei das Bauteil (7) mit dem Anker (2) am Ankergrund (4) befestigt ist, wobei der Ankergrund (4) insbesondere eine flüssigkeitsdichte Beschichtung (5) aufweist, **gekennzeichnet durch** eine ankergrundseitige Dichtung (11), die eine erste Lochscheibe (13), die zwischen dem Bauteil (7) und dem Ankergrund (4) um den Ankerschaft (6) herum angeordnet ist und zwischen dem Bauteil (7) und dem Ankergrund (4) abdichtet, und einen mit der ersten Lochscheibe (13) einstückigen, rohrförmigen ersten Kragen (16), der den Ankerschaft (6) umschließt und in die Durchgangsöffnung (8) im Bauteil (7) ragt, aufweist, und **durch** eine gegenüber der ankerseitigen Dichtung separate, äußere Dichtung (12), die eine zweite Lochscheibe (18), die auf einer dem Ankergrund (4) abgewandten Außenseite des Bauteils (7) abdichtend anliegt und einen mit der zweiten Lochscheibe (18) einstückigen, rohrförmigen zweiten Kragen (19), der den Ankerschaft (6) abdichtend umschließt, aufweist.

2. Dichtungsanordnung nach Anspruch 1, **dadurch gekennzeichnet, dass** die erste Lochscheibe (13) der ankergrundseitigen Dichtung (11) mindestens den dreifachen Außendurchmesser des Ankerschafts (6) aufweist.

3. Dichtungsanordnung nach Anspruch 1 oder 2, **dadurch gekennzeichnet, dass** der erste Kragen (16) der ankergrundseitigen Dichtung (11) mindestens eine Erhebung (17) auf einer Außenseite aufweist.

4. Dichtungsanordnung nach einem der Ansprüche 1 bis 3, **dadurch gekennzeichnet, dass** der zweite Kragen (19) der äußeren Dichtung (12) ein Untermaß in Bezug auf den Ankerschaft (6) aufweist.

5. Dichtungsanordnung nach einem der vorhergehenden Ansprüche, **dadurch gekennzeichnet, dass** eine lochscheibenseitige Mündung eines zweiten Durchgangslochs (20) der äußeren Dichtung (12) eine Aufweitung (21) auf ein Übermaß in Bezug auf den Ankerschaft (6) aufweist.

6. Dichtungsanordnung nach einem der vorhergehenden Ansprüche, **dadurch gekennzeichnet, dass** der zweite Kragen (19) der äußeren Dichtung (12) eine axial abstehende Dichtlippe (22) aufweist, die durch axiales Stauchen nach innen in dichtende Anlage an den Ankerschaft (6) beaufschlagt wird.

7. Dichtungsanordnung nach Anspruch 6, **dadurch gekennzeichnet, dass** die äußere Dichtung (12) eine lochscheibenförmige Tragscheibe (24) aufweist, die auf der zweiten Lochscheibe (18) der äußeren Dichtung (12) angeordnet ist, und dass die Tragscheibe (24) vom zweiten Kragen (19) der äußeren Dichtung (12) durchgriffen wird und dass aus der Tragscheibe (24) die Dichtlippe (22) vorsteht, wenn sie nicht gestaucht ist.

8. Verfahren zur Herstellung einer Dichtungsanordnung nach einem der vorhergehenden Ansprüche, **dadurch gekennzeichnet, dass** zur Befestigung der ankergrundseitigen Dichtung (11) ihr erster Kragen (16) in die Durchgangöffnung (8) im Bauteil (7) gesteckt wird, dass der Anker (2) in die Durchgangsöffnung (8) im Bauteil (7) verbracht und in das Ankerloch (3) im Ankergrund (4) eingebracht wird, dass die äußere Dichtung (12) auf dem Ankerschaft (6) angeordnet wird, und dass das Bauteil (7) gegen den Ankergrund (4) gespannt und dabei der zweite Kragen (19) bzw. die Dichtlippe (22) der äußeren Dichtung (12) gestaucht und in dichtende Anlage an den Ankerschaft (6) beaufschlagt wird.

## Claims

1. Seal arrangement having an anchor (2) anchored in an anchoring hole (3) in an anchoring substrate (4) of a built structure, which anchor has an anchor shank (6) which protrudes from the anchoring substrate (4) and passes through a through-opening (8) in a component (7), the component (7) being fixed to the anchoring substrate (4) with the anchor (2), wherein the anchoring substrate (4) especially has a fluid-tight coating (5), **characterised by** an anchoring-substrate-side seal (11) having a first apertured disc (13) which is arranged around the anchor shank (6) between the component (7) and the anchoring substrate (4) and effects a seal between the component (7) and the anchoring substrate (4), and a tubular first collar (16) formed integrally with the first apertured disc (13), which collar surrounds the anchor shank (6) and projects into the through-opening (8) in the component (7), and by an outer seal (12), which is separate from the anchor-side seal and has a second apertured disc (18) which rests sealingly on an outer side of the component (7) remote from the anchoring substrate (4) and has a tubular second collar (19) formed integrally with the second apertured disc (18), which collar sealingly surrounds the anchor shank (6).

2. Seal arrangement according to claim 1, **characterised in that** the first apertured disc (13) of the anchoring-substrate-side seal (11) has at least three times the external diameter of the anchor shank (6).

3. Seal arrangement according to claim 1 or 2, **characterised in that** the first collar (16) of the anchoring-substrate-side seal (11) has at least one protuberance (17) on an outer side.

4. Seal arrangement according to any one of claims 1 to 3, **characterised in that** the second collar (19) of the outer seal (12) is undersized relative to the anchor shank (6).

5. Seal arrangement according to any one of the preceding claims, **characterised in that** the mouth of a second through-hole (20) on the apertured-disc side of the outer seal (12) widens out (21) such that it is oversized relative to the anchor shank (6).

6. Seal arrangement according to any one of the preceding claims, **characterised in that** the second collar (19) of the outer seal (12) has an axially projecting sealing lip (22) which, by axial compression, is urged inwards into sealing contact with the anchor shank (6).

7. Seal arrangement according to claim 6, **characterised in that** the outer seal (12) has a support disc (24) in the form of an apertured disc which is arranged on the second apertured disc (18) of the outer seal (12), and the second collar (19) of the outer seal (12) passes through the support disc (24), and the sealing lip (22), when it is not compressed, protrudes from the support disc (24).

8. Method of producing a seal arrangement according to any one of the preceding claims, **characterised in that** for fixing the anchoring-substrate-side seal (11) its first collar (16) is inserted into the through-opening (8) in the component (7); the anchor (2) is introduced into the through-opening (8) in the component (7) and into the anchoring hole (3) in the anchoring substrate (4); the outer seal (12) is arranged on the anchor shank (6); and the component (7) is clamped against the anchoring substrate (4), with the second collar (19) or the sealing lip (22) of the outer seal (12) being compressed and being urged into sealing contact with the anchor shank (6).

## Revendications

1. Ensemble d'étanchement muni d'un tirant d'ancrage (2) qui est verrouillé dans un trou d'ancrage (3) pratiqué dans une base d'ancrage (4) d'un ouvrage de construction, et est doté d'une tige d'ancrage (6) faisant saillie au-delà de ladite base d'ancrage (4) et traversant un orifice de passage (8) ménagé dans une pièce structurelle (7), ladite pièce structurelle (7) étant fixée à ladite base d'ancrage (4) par ledit tirant d'ancrage (2), ladite base d'ancrage (4) étant notamment pourvue d'un revêtement (5) étanche aux liquides, **caractérisé par** une garniture d'étanchement (11) située côté base d'ancrage, comprenant un premier disque perforé (13) qui est disposé tout autour de la tige d'ancrage (6), entre la pièce structurelle (7) et la base d'ancrage (4), et assure l'étanchéité entre ladite pièce structurelle (7) et ladite base d'ancrage (4), et un premier collet tubulaire (16) qui forme un seul tenant avec ledit premier disque perforé (13), ceinture ladite tige d'ancrage (6) et pénètre dans l'orifice de passage (8) ménagé dans ladite pièce structurelle (7) ; et par une garniture extérieure d'étanchement (12) distincte de la garniture d'étanchement située côté tirant d'ancrage, et comprenant un second disque perforé (18) en applique, avec effet d'étanchement, sur une face extérieure de ladite pièce structurelle (7) qui pointe à l'opposé de ladite base d'ancrage (4), et un second collet tubulaire (19) qui forme un seul tenant avec ledit second disque perforé (18) et ceinture ladite tige d'ancrage (6) avec effet d'étanchement.

2. Ensemble d'étanchement selon la revendication 1, **caractérisé par le fait que** le premier disque perforé (13) de la garniture d'étanchement (11), située côté base d'ancrage, offre un diamètre extérieur représentant au moins le triple de celui de la tige d'ancrage (6).

3. Ensemble d'étanchement selon la revendication 1 ou 2, **caractérisé par le fait que** le premier collet (16) de la garniture d'étanchement (11), située côté base d'ancrage, est muni d'au moins une protubérance (17) sur une face extérieure.

4. Ensemble d'étanchement selon l'une des revendications 1 à 3, **caractérisé par le fait que** le second collet (19) de la garniture extérieure d'étanchement (12) présente un surdimensionnement par rapport à la tige d'ancrage (6).

5. Ensemble d'étanchement selon l'une des revendications précédentes, **caractérisé par le fait qu'**une embouchure d'un second trou de passage (20) de la garniture extérieure d'étanchement (12), située côté disque perforé, présente une zone élargie (21) induisant un surdimensionnement par rapport à la tige d'ancrage (6).

6. Ensemble d'étanchement selon l'une des revendications précédentes, **caractérisé par le fait que** le second collet (19) de la garniture extérieure d'étanchement (12) présente une lèvre d'étanchement (22) qui fait saillie dans le sens axial et est sollicitée, par compression axiale vers l'intérieur, pour venir en applique contre la tige d'ancrage (6) avec effet d'étanchement.

7. Ensemble d'étanchement selon la revendication 6, **caractérisé par le fait que** la garniture extérieure d'étanchement (12) comporte un disque de support (24) en forme de disque perforé, placé sur le second disque perforé (18) de ladite garniture extérieure d'étanchement (12) ; **par le fait que** ledit disque de support (24) est traversé par le second collet (19) de ladite garniture extérieure d'étanchement (12) ; et **par le fait que** la lèvre d'étanchement (22) dépasse au-delà dudit disque de support (24) lorsqu'elle n'est pas comprimée.

8. Procédé de fabrication d'un ensemble d'étanchement conforme à l'une des revendications précédentes, **caractérisé par le fait que**, pour instaurer la fixation de la garniture d'étanchement (11) située côté base d'ancrage, son premier collet (16) est emboîté dans l'orifice de passage (8) ménagé dans la pièce structurelle (7) ; **par le fait que** le tirant d'ancrage (2) est engagé dans ledit orifice de passage (8) ménagé dans ladite pièce structurelle (7), et est inséré dans le trou d'ancrage (3) pratiqué dans ladite base d'ancrage (4) ; **par le fait que** la garniture extérieure d'étanchement (12) est mise en place sur la tige d'ancrage (6) ; et **par le fait que** ladite pièce structurelle (7) est bloquée contre ladite base d'ancrage (4), le second collet (19), ou la lèvre d'étanchement (22) de ladite garniture extérieure d'étanchement (12), étant alors respectivement comprimé(e) et sollicité(e) pour venir en applique contre ladite tige d'ancrage (6), avec effet d'étanchement.
